# EUROPEAN PATENT SPECIFICATION

(11) **EP 1 872 230 B1**
(45) Date of publication and mention of the grant of the patent: **05.01.2011**
(21) Application number: 06721834.7
(22) Date of filing: 18.04.2006
(51) Int. Cl.: G06F 9/445

(54) **CENTRALIZED MEMORY MANAGEMENT IN WIRELESS TERMINAL DEVICES**
ZENTRALISIERTE SPEICHERVERWALTUNG IN DRAHTLOSEN ENDGERÄTEN
GESTION DE MEMOIRE CENTRALISEE DANS DES DISPOSITIFS TERMINAUX SANS FIL

(30) Priority: 18.04.2005 US 672087 P
(43) Date of publication of application: 02.01.2008
(73) Proprietor: RESEARCH IN MOTION LIMITED, Waterloo, Ontario N2L 3W8 (CA)
(72) Inventor: WETHERLY, Curtis, Toronto, ON M6G 3P9 (CA); GORING, Bryan, R., Milton, ON L9T 5V4 (CA); DEBRUIN, David, Guelph, ON N1E 4E7 (CA)
(74) Representative: Patel, Binesh
(86) International application number: PCT/CA2006/000602
(87) International publication number: WO 2006/111010

(56) References cited:
- WO-A-00/60453
- WO-A-01/50712
- US-A1- 2002 142 762
- US-A1- 2003 032 417
- US-A1- 2003 131 046
- US-A1- 2004 215 700
- US-A1- 2004 220 998
- US-A1- 2005 124 332
- US-B1- 6 480 935
- US-B1- 6 985 976
- "DESCRIPTION SCRIPTING LANGUAGE FOR UPDATING AND INSTALLING APPLICATION VIA THE INTERNET" IBM TECHNICAL DISCLOSURE BULLETIN, IBM CORP. NEW YORK, US, vol. 40, no. 6, 1 June 1997 (1997-06-01), pages 151-153, XP000728370 ISSN: 0018-8689

## Description

### TECHNICAL FIELD

The present invention relates to wireless communications devices, and in particular to a method and system for visual design of resource management preferences.

### BACKGROUND OF THE INVENTION

The number and variety of wireless terminal devices, such as mobile telephones, personal computers and PDAs with wireless communication capabilities, self service kiosks and two-way pagers is rapidly increasing. Software applications which run on these devices increase their utility. For example, a mobile phone may include an application which retrieves the weather for a range of cities, or a PDA may include an application that allows a user to shop for groceries. These software applications take advantage of the connectivity to a network in order to provide timely and useful services to users.

As is well known in the art, wireless terminal devices commonly have limited memory resources, with the result that ongoing handling of low-memory conditions is required. Wireless applications developers try to address these issues by various known means, such as by utilizing software design techniques that require less memory, optimizing internal data structures, limiting the amount of data that users can exploit using the application, and/or by removing (deleting) redundant data or code. Since applications are designed to operate independently of one another, the implementation of these approaches is normally unique to each application, which means that every application installed on a terminal device will have its own memory management code. This "duplication" of memory management software consumes additional memory, as so further reduces available memory resources. A further limitation of this arrangement is that it requires the software developer(s) to have experience in memory optimization techniques and be explicitly aware of the memory restrictions of every device type. This creates a barrier to the development of new wireless applications.

US 2003/0032417 discloses a system and method for managing the deleting and reloading of software application components on a wireless device, such as a cellular telephone, personal digital assistant, pager, or other computer platform. The wireless device has one or more resident executable software applications wherein each application has one or more application components and application-associated data, such as software licenses and user-specific data. The wireless device selectively deletes one or more application components of the resident software applications without loss of the application-associated data to clear resources on the wireless device, and selectively prompts an application download server across a wireless network to transmit deleted application components needed to be reinstalled on the wireless device to execute the application.

US2002/0142762 discloses network-initiated uninstallation of programs on remote modules, such as wireless telephones, performed over a wireless network to recall programs stored on the wireless telephone that are faulty or harmful to the wireless telephone, the wireless network, or a user of the wireless telephone. If one or more recall criteria are met for uninstallation of a targeted application program, a recall command source constructs a recall command. A program manager, using a database containing information about each program downloaded onto each wireless telephone in the network, identifies, for the recall command source, which wireless telephones carry the targeted application program. The recall command includes a unique application identification for the targeted application program and an instruction to the wireless telephone to uninstall the targeted application program. The recall command is broadcast over the wireless network to the wireless telephones. In response to the recall command, the wireless telephone automatically uninstalls the targeted application program by executing a recall program on the wireless telephone.

Accordingly, improved methods and systems for managing low-memory conditions in wireless terminal devices remains highly desirable.

### SUMMARY OF THE INVENTION

Accordingly, an object of the present invention is to provide methods and systems for centralized memory management in wireless terminal devices.

Thus, an aspect of the present invention provides a method of enabling memory management for a terminal device of a wireless network as claimed in claim 1. In accordance with another aspect of the present invention, a system is provided for enabling centralized memory management for a terminal device of a wireless network according to claim 12.

### BRIEF DESCRIPTION OF THE DRAWINGS

Further features and advantages of the present invention will become apparent from the following detailed description, taken in combination with the appended drawings, in which:

FIG. 1 is a block diagram schematically illustrating a network system;

FIG. 2 is a block diagram schematically illustrating components and operation of a representative centralized memory management system in accordance with an embodiment of the present invention;

FIG. 3 is a block diagram schematically illustrating elements and operation of an application development environment in accordance with a representative embodiment of the present invention;

FIG. 4 is a representative user interface screen generated by a memory management script in accordance with an aspect of the present invention; and

FIG. 5 is a state diagram illustrating operational states of the centralized memory management system of FIG. 2;

It will be noted that throughout the appended drawings, like features are identified by like reference numerals.

### DETAILED DESCRIPTION OF THE PREFERRED EMBODIMENT

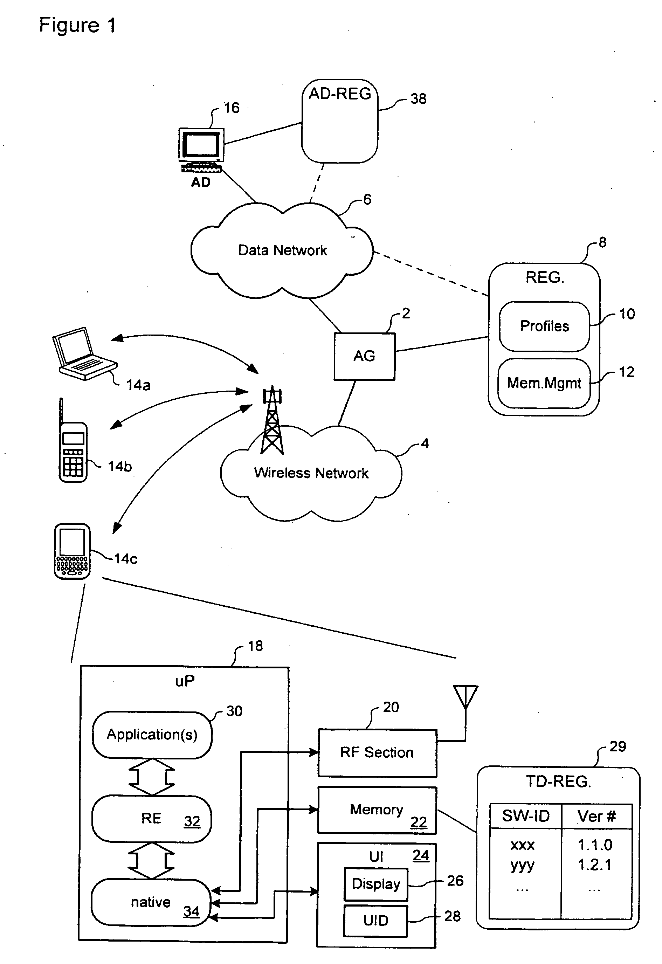

The present invention provides methods and systems for centralized memory management in wireless terminal devices. Embodiments of the invention are described below, by way of example only, with reference to FIGs. 1-5.

Referring to FIG. 1, a network in which the present invention may be utilised generally comprises an Application Gateway (AG) 2 coupled between a wireless network 4 and a data network 6, such as for example, the internet; and a registry 8 comprising a profiles registry 10 and a memory management registry 12. The profiles registry 10 contains, for each subscriber's terminal device 14, a respective profile which contains information identifying each application installed on the terminal device 14. The memory management registry 12 contains, for each one of a plurality of wireless applications, one or more memory management scripts that may be used to reduce the memory utilized by the respective application. These memory management scripts will normally be provided by the application developer, and may either be stored in the memory management registry 12 itself, or on a remote "back-end" server 16 maintained by the application developer. In the later case, the registry 12 will contain a link to each script, rather than the script code itself. The Registry 8 can be co-resident with the AG 2 or may be located remotely from the AG 2 and accessed by the AG 2 via the data network 8.

The AG 2 generally operates to mediate message flows between terminal devices 14 connected to the wireless network 4 and data services accessible through the data network 6 in the manner described in Applicant's co-pending United States Patent Publications Nos. 2004/0215700 and 2004/0220998, the contents of both of which are incorporated herein by reference.

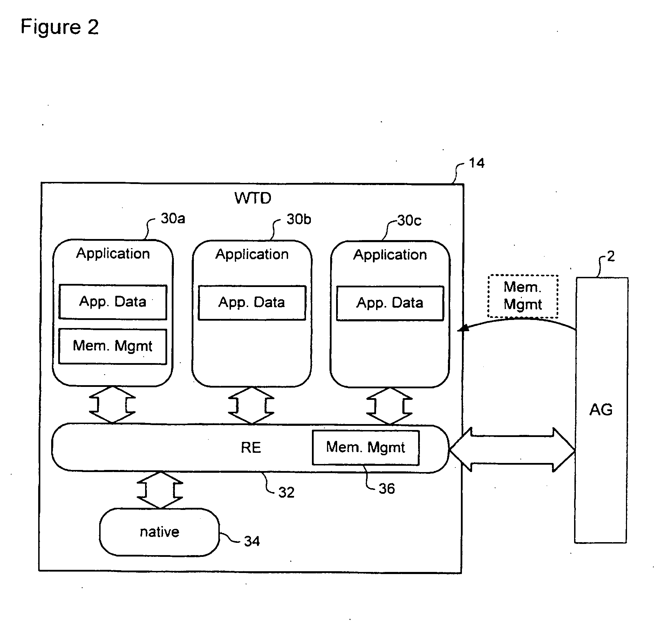

In general, the terminal devices 14 can be any of a wide variety of software-controlled wireless devices including, but not limited to mobile telephones, personal computers and PDAs with wireless communication capabilities, self service kiosks and two-way pagers. As may be seen in FIG. 1, such devices generally comprise a microprocessor 18 connected to an RF section 20 for wireless communications, a memory 22 (at least a portion of which will normally be non-volatile), and user interface (UI) 24 including a display 26 and one or more user input/output devices (e.g. keyboard, thumb-wheel, stylus, microphone, speaker etc.) 28. The memory is used, inter alia, to store a Terminal Device Registry 29 which stores information identifying each application installed on the terminal device 14. The microprocessor 18 operates under software control to provide the functionality of the terminal device 14. As shown in FIG. 2, the software is preferably designed on a layered model, in which one or more wireless applications 30 control the user's experience of the terminal device 14, and a runtime environment (RE) 32 translates between the application software and the native machine-language 34 of the terminal device 14 to control the terminal device hardware, and communicate with data services. This layered software model, and the manner in which it operates is known from Applicant's co-pending United States Patent Publications Nos. 2004/0215700 and 2004/0220998.

As shown in FIG. 2, the RE 32 also includes a memory management kernel 36, which enables the RE 32 to monitor memory utilization and interact with the AG 2 to implement centralized memory management, as will be described in greater detail below.

As may also be seen in FIG. 2, each application will normally contain application logic (e.g. XML or Java program code) and application data. Each application may, or may not, include memory management functionality. In wireless network systems utilizing centralized memory management in accordance with the present invention, it is expected that application developers will increasing elect to abbreviate any such "embedded" memory management functionality, or omit it entirely in favour of the centralized memory management system, as will be described in greater detail below.

As described in Applicant's co-pending United States Patent Publications Nos. 2004/0215700 and 2004/0220998, operation of the AG 2 enables a software application executing in a terminal device 14 to communicate with data services (not shown) offered through the data network 6. This operation may, for example, including accessing and downloading files from back-end data sources (not shown) connected to the data network 6. As may be seen in FIG. 1, and described in greater detail below, an application developer can also distribute and support their software through the data network 6. For example, downloadable application software, installation scripts and memory management scripts can be stored in a registry 38 of a back-end server 16 which is maintained by the application developer and which can be accessed by users (either directly or indirectly) through the data network 6. In the particular case of memory management scripts, it is convenient to use this mechanism for "download-on-demand" distribution, because it reduces resource requirements of the AG 2, and facilitates maintenance and updating of the scripts by the application developer. In order to enable "on-Demand" downloading of memory management scripts, the application developer can formulate and send a registration message to the AG 2. The registration message may include, for example, a software identifier (Software-ID) which uniquely identifies the involved wireless application, and a link (e.g. a URL) to each memory management script associated with that wireless application. On the basis of the registration message, the AG 2 can then save the script URL(s) in the memory management registry 12, for use as required by terminal devices 14 hosted by the AG 2, as will be described in greater detail below.

### Application Development Environment (Studio)

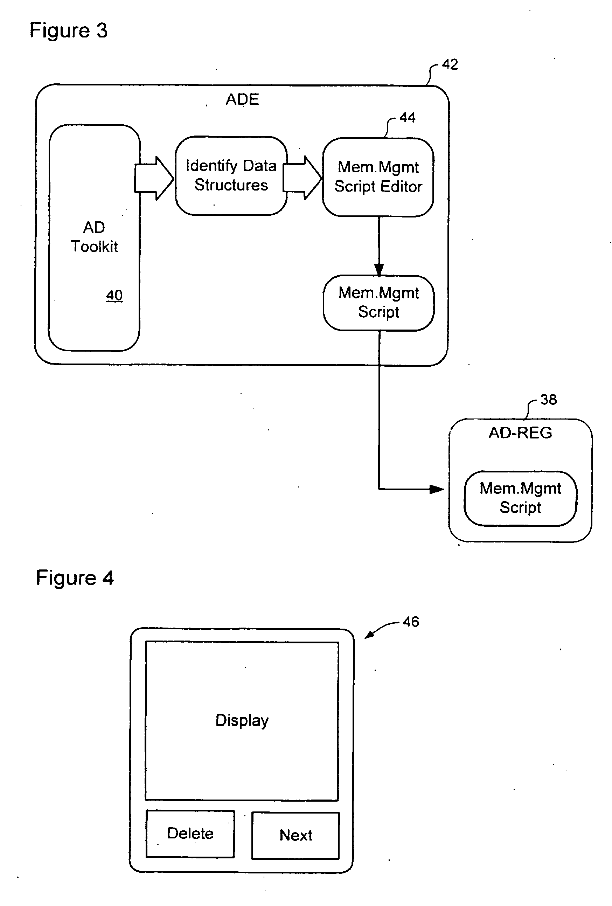

Referring now to FIG. 3, the application developer uses an application development toolkit (ADT) 40 of an application development environment (ADE) 42 to code, test, and debug application software, in a manner generally known in the art. This same ADE 42 is also used for developing memory management logic for the application. As mentioned previously, memory management functionality is conventionally embedded within the application logic, and operates to reduce the amount of memory resources used by the application. Various methods that may be implemented including, without limitation: categorization or prioritization of application data; deletion of temporary files; deletion of low priority and/or non-essential application data; deletion of "download-on-demand" resources such as images, sounds, animation) which can be retrieved from a server over the air when required by an application; and deletion of non-essential application logic such as automatic application update scripts.

As will be appreciated, all of these functions must necessarily take into account the specifics of each application. Accordingly, the ADE 42 preferably also includes a memory management script editor 44 for assisting the application developer to generate one or more memory management scripts as part of the application development process. Each of the generated memory management scripts can be stored in an AD registry 38, which enables the script(s) to be downloaded to a terminal device 14separately from the application itself.

In general, the memory management script editor 44 analyses the application source code to identify data structures instantiated by the application during runtime. The application developer can then select those data structures which can be safely de-allocated to free up device resources. In addition to the items noted above, top-most data structures that are not contained in any other data structures are typically available for de-allocation, along with any contained data inside that instance. For example, consider a data component of type "Horse", which contains a data component of type "Race". If the user deletes all instances of "Horse" data (the top-most data structure), the memory management script can automatically delete all instances of "Race" data since it can no longer be referenced. Based on knowledge of data structures which can be safely de-allocated, the memory management script editor can automatically generate a memory management script which:
(a) provides a user interface 46 (Fig. 4) for showing the device's user stored data (that is, instances of top-most data structures) that can be safely deleted, and allowing the user to select data for deletion; and
(b) deletes stored data in accordance with the user's input. As mentioned above, this function would include deletion of all lower-level data structures contained within any deleted top-level data structures.

If desired, the application developer can use the memory management script editor 44 to prepare a single memory management script, which includes all of the memory management functionality associated with a respective application. Alternatively, two or more scripts can be prepared, each script providing respective different memory management functions. For example, the application developer could prepare one script for categorizing application data as low or high priority; a second script for deleting temporary files; a third script for deleting on-demand resources; and a fourth for deleting low priority application data and for identifying and removing non-essential application logic. As a still further alternative, some memory management functionality (e.g. prioritization of application data, and deletion of temporary files) may be embedded within the application, and other memory management functionality encoded within memory management scripts. In all cases, the memory management scripts are designed by the application developer taking into account the particulars of the respective application, and are designed to execute within the context of the application.

The application developer can also tag each script with a "use" rating, to control how the scripts are used. For example, a script that will have no discernable effect on the user's experience of the application, and which can therefore be used during normal operations (e.g. a script to delete temporary files) can be tagged with a "Normal" use rating. A script which will likely cause a minor inconvenience to the user, and which would therefore be used in a limited memory scenario (e.g. a script to delete Download on Demand resources) can be tagged with a "Limited" use rating. A script which will likely cause a significant impairment of use of the application, and which would therefore be used in a critical memory scenario (e.g. a script to delete low priority application data) can be tagged with a "Critical" use rating.

### Centralized Memory Management

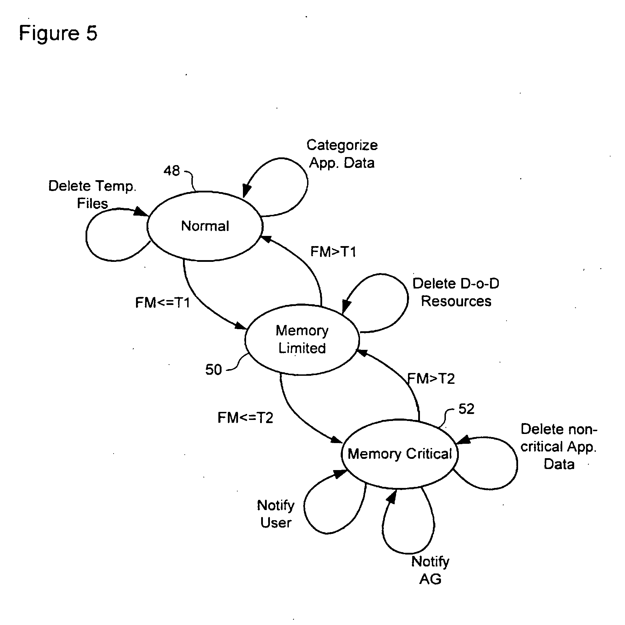

As mentioned above, the RE 32 includes a memory management kernel 36(FIG. 2), which enables the RE 32 to interact with the native layer 34 to monitor memory utilization and communicate with the AG 2 to implement centralized memory management. FIG. 5 is a state diagram illustrating representative operational states of the memory management kernel 36, and representative memory management functionality that can be executed within each state.

Referring to FIG. 5, in a "Normal" state 48, the memory management kernel 36 monitors memory utilization, for example by comparing the amount of free memory (FM) that is available at any given time to a predetermined first threshold (T1). However, the memory management kernel 36 of the RE 32 does not take any action to control memory utilization or free up memory. Instead, memory management functionality (if any) embedded within each application 30 is allowed to operate, for example to categorize/prioritize application data and delete temporary files.

If the amount of free memory drops below the first threshold (T1), the RE memory management kernel 36 transitions to a "memory limited" state 50. In this state, memory management scripts are used to reduce the amount of memory used by each installed application, but without affecting application data. For example, Download-on-Demand features, which can be restored as needed during run-time of an application, can be deleted. As mentioned above, this functionality must take into account the particulars of each application, and thus will be controlled by scripts provided by the application developer. Accordingly, for each installed application, the RE 32 communicates with the AG 2 to access and download the applicable memory management scripts, either from the AG registry 8, or from a back-end server 16 maintained by the application developer, as described above. Thus, for example, the RE 32 can use a TD registry 29 (Fig. 1) to obtain the respective software identifier (software-ID) information for each installed application. This information is inserted into a memory management message having a "memory limited" indication, which is sent to the AG 2. In response to the "memory limited" message, the AG 2 searches its registry 8 to identify memory management scripts associated with each application (as identified by the software-ID information) and uses the "use rating" associated with each script to select those scripts that are appropriate to the "Memory Limited" state of the RE memory management kernel 36. The selected memory management scripts are then downloaded to the terminal device 14 and executed by the RE 32. Once each script has been used, it can be deleted so as to avoid unnecessarily taking up memory space.

If, as a result of the above operations, the amount of free memory increases above the first threshold (T1), the RE memory management kernel 36 returns to the "Normal" state 48, and memory management functionality continues as described above for that state.

However if, in spite of the actions taken in the "memory limited" state, the amount of free memory further drops below a second threshold (T2), the RE memory management kernel transitions to a "Memory Critical" state 52. In this state, aggressive actions are taken to reduce the amount of memory used by each installed application, and this may affect application data. For example, non-critical or low priority application data and/or application logic can be deleted. As with the deletion of Download-on-Demand features, this functionality must take into account the particulars of each application, and thus will be controlled by memory management scripts provided by the application developer as described above. Thus, for example, the RE 32 can a formulate a "Memory Critical" message, which is sent to the AG 2. In response to the "Memory Critical" message, the AG 2 retrieves corresponding memory management scripts (or links thereto) from its registry 8, using the "use rating" assigned by the application developer to select scripts that are appropriate to the "Memory Critical" state of the RE memory management kernel 36.

If desired, the RE memory management kernel 36 can also implement various functions in the "Memory Critical" state 52, which are independent of any one application. Representative application-independent functions include, without limitation:
- Notifying the user;
- Identifying applications that are infrequently used, or which have not been used for an extended period of time. User interface screens such as the example shown in Fig. 4 can be provided to enable the user to select and delete any such applications and their associated application data. These user interface screens may be provided in a script downloaded from the AG 2 by the RE memory management kernel 36, and subsequently deleted once it has served its purpose;

In addition to sending memory management scripts (or links thereto) in response to the "Memory Critical" message, the AG 2 may, for example, limit messaging traffic to the terminal device 14, so as to reduce the memory resources required by any one application.

If, as a result of the above operations, the amount of free memory increases above the second threshold (T2), the RE memory management kernel 36 returns to the "Memory Limited" state 50, and memory management operations continue as described above for that state.

As will be appreciated, normal operation of a wireless application 30 can produce large transients in memory utilization. This can produce short term fluctuations in the free memory, which may unnecessarily force the RE memory management kernel 36 into "memory limited" or "memory critical" states. Accordingly, it is preferable to introduce a delay function, which serves to reduce the sensitivity of the RE memory management kernel 36 to short term fluctuations in the free memory. This may be accomplished in various ways. For example, the RE memory management kernel 36 can be programmed to transition from Normal to Memory Limited states only if the free memory remains below the first threshold (T1) for a predetermined period of time. Such a time period may be indicated, for example, by a clock function (or any equivalent function which is well known in the art) that starts when the free memory crosses the threshold value. This same approach may be used (with appropriate adjustments) for controlling the other possible state transitions. Instead of a clock function, the RE memory management Kernel 36 could control state transitions based on a running average free memory computed over a suitable time interval (or, equivalently, a selected number of samples of the free memory taken at regular time intervals).

It will also be appreciated that execution of the memory management functions executed during the Memory Limited and Memory Critical states could well disrupt use of the terminal device 14. For example, if the RE memory management kernel 36 transitions to either of the Memory Critical state while a wireless application is in use, immediate downloading and execution of scripts to identify and delete seldom-used applications may be extremely inconvenient to the user. Accordingly, when the RE memory management kernel 36 transitions to either of the Memory Limited and Memory Critical states, it may delay execution of some (or all) of its memory management operations. Thus, for example, upon a transition to the Memory Critical state, the RE memory management kernel 36 may provide the user with a "low memory" warning as a "pop-up" message, and possibly send a warning message to the AG 2. However, downloading and execution of scripts to delete low priority application data and/or logic, for example, may be delayed until the terminal device becomes idle (i.e. when there is no user activity on the device for a predefined amount of time).

The embodiment(s) of the invention described above is(are) intended to be exemplary only. The scope of the invention is therefore intended to be limited solely by the scope of the appended claims.

## Claims

1. A method of enabling memory management for a terminal device (14) of a wireless network (4), the method comprising:
using a memory management script editor (44) of an Application Development Environment (42) to:
analyse a source code of a wireless application (30) to identify a first plurality of data structures of the application instantiated by the application during runtime;
identify, from the first plurality of data structures, a second plurality of data structures which can be safely deleted; and
automatically generate at least one memory management script for execution on the terminal device, the at least one memory management script providing a user interface for displaying instances of the second plurality of data structures and receiving user input, and for deleting selected instances of the second plurality of data structures in accordance with the user input; and
enabling On-Demand downloading of each memory management script to the terminal device.

2. A method as claimed in claim 1, wherein the second plurality of data structures comprise any one or more of:
temporary files;
Download-on-demand resources used by the application; and
top-level data structures.

3. A method as claimed in claim 2, wherein each memory management script implements a predetermined memory management functionality.

4. A method as claimed in claim 3, wherein the predetermined memory management functionality comprises any one or more of:
displaying instances of each one of the second plurality of data structures;
receiving user input indicative of whether or not a user wishes to delete each displayed instance; and
deleting the displayed instance in accordance with the received user input.

5. A method as claimed in claim 4, wherein the displayed instance is an instance of a top-level data structure, and wherein the step of deleting the displayed instance comprises a step of deleting corresponding instances of lower level data structures contained within the top-level data structure.

6. A method as claimed in claim 3, wherein the predetermined memory management functionality comprises any one or more of:
deletion of low priority application data; and
deletion of non-essential application logic.

7. A method as claimed in claim 1, further comprising a step of assigning a use rating to each memory management script.

8. A method as claimed in claim 7, wherein the use rating comprises any one of:
a "Normal" rating indicating that the respective script provides memory management functionality appropriate for a normal operating condition of the terminal device;
a "Limited" rating indicating that the respective script provides memory management functionality appropriate for a low memory operating condition of the terminal device; and
a "Critical" rating indicating that the respective script provides memory management functionality appropriate for a critically low-memory operating condition of the terminal device.

9. A method as claimed in claim 1, wherein the step of enabling On-Demand downloading of each memory management script comprises steps of: making each script accessible through a data network; and providing information identifying each script to an application gateway hosting a plurality of terminal devices.

10. A method as claimed in claim 9, wherein the step of making each script accessible through a data network comprises a step of storing each script in a registry of a back-end server connected to the data network.

11. A method as claimed in claim 10, wherein the step of providing information identifying each script to the application gateway comprises a step of sending a registration message to the application gateway, the registration message containing a software identifier identifying the wireless application and a respective link to each stored memory management script.

12. A system for enabling centralized memory management for a terminal device (14) of a wireless network (4), the system comprising:
a memory management script editor (44) of an Application Development Environment (42), the memory management script editor (44) being adapted to:
analyse a source code of a wireless application to identify a first plurality of data structures of the application instantiated by the application during runtime;
identify, from the first plurality of data structures, a second plurality of data structures which can be safely deleted; and
automatically generate at least one memory management script for execution on the terminal device, the at least one memory management script providing a user interface (46) for displaying instances of the second plurality of data structures and receiving user input, and for deleting selected instances of the second plurality of data structures in accordance with the user input; and
means (8, 16, 36) for enabling On-Demand downloading of each memory management script to the terminal device.

13. A system as claimed in claim 12, wherein the second plurality of data structures comprise any one or more of:
temporary files;
Download-on-demand resources used by the application;
top-level data structures; and
data components contained within a top-level data structure.

14. A system as claimed in claim 13, wherein each memory management script implements a predetermined memory management functionality.

15. A system as claimed in claim 14, wherein the predetermined memory management functionality comprises any one or more of:
displaying instances of each one of the second plurality of data structures;
receiving user input indicative of whether or not a user wishes to delete any one or more of the displayed instances; and
deleting one or more displayed instances in accordance with the received user input.

16. A system as claimed in claim 15, wherein the displayed instance is an instance of a top-level data structure, and wherein the functionality for deleting the displayed instance comprises functionality for deleting corresponding instances of lower level data structures contained within the top-level data structure.

17. A system as claimed in claim 14, wherein the predetermined memory management functionality comprises any one or more of: deletion of low priority application data; and deletion of non-essential application logic.

18. A system as claimed in claim 12, further comprising means for assigning a use rating to each memory management script.

19. A system as claimed in claim 18, wherein the use rating comprises any one of:
a "Normal" rating indicating that the respective script provides memory management functionality appropriate for a normal operating condition of the terminal device;
a "Limited" rating indicating that the respective script provides memory management functionality appropriate for a low memory operating condition of the terminal device; and
a "Critical" rating indicating that the respective script provides memory management functionality appropriate for a critically low-memory operating condition of the terminal device.

20. A system as claimed in claim 12, wherein the means for enabling On- Demand downloading of each memory management script comprises:
a registry of a back-end server connected to a data network, the registry being adapted to store each memory management script; and
means for providing information identifying each script to an application gateway hosting a plurality of terminal devices.

21. A system as claimed in claim 20, wherein the means for providing information identifying each script to the application gateway comprises means for sending a registration message to the application gateway, the registration message containing a software identifier identifying the wireless application and a respective link to each stored memory management script

## Patentansprüche

1. Verfahren zum Ermöglichen einer Speicherverwaltung für ein Endgerät (14) eines drahtlosen Netzwerks (4), wobei das Verfahren aufweist:
Verwenden eines Speicherverwaltungs-Skript-Editors (44) einer Anwendungsentwicklungsumgebung (Application Development Environment) (42) zum:
Analysieren eines Quellcodes einer drahtlosen Anwendung (30), um eine erste Vielzahl von Datenstrukturen der Anwendung zu identifizieren, die von der Anwendung während einer Laufzeit instantiiert wird;
Identifizieren, aus der ersten Vielzahl von Datenstrukturen, einer zweiten Vielzahl von Datenstrukturen, die sicher gelöscht werden können; und
automatischen Erzeugen zumindest eines Speicherverwaltungs-Skripts zur Ausführung auf dem Endgerät, wobei das zumindest eine Speicherverwaltungs-Skript eine Benutzerschnittstelle vorsieht zum Anzeigen von Instanzen der zweiten Vielzahl von Datenstrukturen und Empfangen einer Benutzereingabe, und zum Löschen ausgewählter Instanzen der zweiten Vielzahl von Datenstrukturen in Übereinstimmung mit der Benutzereingabe; und
Ermöglichen eines Herunterladens bei Bedarf (On-Demand) eines jeden Speicherverwaltungs-Skripts auf das Endgerät.

2. Verfahren gemäß Anspruch 1, wobei die zweite Vielzahl von Datenstrukturen eines oder mehr aufweist aus:
temporären Dateien;
"Herunterladen bei Bedarf"-Ressourcen, die von der Anwendung verwendet werden; und
Top-Level-Datenstrukturen.

3. Verfahren gemäß Anspruch 2, wobei jedes Speicherverwaltungs-Skript eine vorgegebene Speicherverwaltungsfunktionalität implementiert.

4. Verfahren gemäß Anspruch 3, wobei die vorgegebene Speicherverwaltungsfunktionalität eines oder mehr aufweist aus:
Anzeigen von Instanzen von jeder der zweiten Vielzahl von Datenstrukturen;
Empfangen einer Benutzereingabe, die anzeigt, ob ein Benutzer jede angezeigte Instanz löschen möchte oder nicht; und
Löschen der angezeigten Instanz in Übereinstimmung mit der empfangenen Benutzereingabe.

5. Verfahren gemäß Anspruch 4, wobei die angezeigte Instanz eine Instanz einer Top-Level-Datenstruktur ist und wobei der Schritt eines Löschens der angezeigten Instanz einen Schritt eines Löschens von entsprechenden Instanzen von Datenstrukturen einer unteren Ebene (lower level) aufweist, die in der Top-Level-Datenstruktur enthalten sind.

6. Verfahren gemäß Anspruch 3, wobei die vorgegebene Speicherverwaltungsfunktionalität eines oder mehr aufweist aus:
Löschen von Anwendungsdaten mit niedriger Priorität; und
Löschen von nicht notwendiger Anwendungslogik.

7. Verfahren gemäß Anspruch 1, das weiter einen Schritt aufweist eines Zuweisens einer Nutzungsbewertung zu jedem Speicherverwaltungs-Skript.

8. Verfahren gemäß Anspruch 7, wobei die Nutzungsbewertung eines aufweist aus:
a eine Bewertung "normal", die anzeigt, dass das jeweilige Skript eine Speicherverwaltungsfunktionalität vorsieht, die für eine normale Betriebsbedingung des Endgeräts geeignet ist;
b eine Bewertung "begrenzt", die anzeigt, dass das jeweilige Skript eine Speicherverwaltungsfunktionalität vorsieht, die für eine Betriebsbedingung mit wenig Speicher des Endgeräts geeignet ist; und
c eine Bewertung "kritisch", die anzeigt, dass das jeweilige Skript eine Speicherverwaltungsfunktionalität vorsieht, die für eine Betriebsbedingung mit bedenklich wenig Speicher des Endgeräts geeignet ist.

9. Verfahren gemäß Anspruch 1, wobei der Schritt eines Ermöglichens eines Herunterladens bei Bedarf eines jeden Speicherverwaltungs-Skripts die Schritte aufweist: Zugänglich-machen jedes Skripts über ein Datennetzwerk; und Liefern von Information, die jedes Skript identifiziert, an ein Anwendungs-Gateway, das eine Vielzahl von Endgeräten hostet.

10. Verfahren gemäß Anspruch 9, wobei der Schritt des Zugänglich-machens eines jeden Skripts über ein Datennetzwerk einen Schritt aufweist eines Speicherns jedes Skripts in einem Register eines Back-End-Servers, der mit dem Datennetzwerk verbunden ist.

11. Verfahren gemäß Anspruch 10, wobei der Schritt des Lieferns von Information, die jedes Skript identifiziert, an das Anwendungs-Gateway einen Schritt aufweist eines Sendens einer Registrierungsnachricht an das Anwendungs-Gateway, wobei die Registrierungsnachricht einen Software-Identifizierer, der die drahtlose Anwendung identifiziert, und einen jeweiligen Link zu jedem gespeicherten Speicherverwaltungs-Skript enthält.

12. System zum Ermöglichen einer zentralisierten Speicherverwaltung für ein Endgerät (14) eines drahtlosen Netzwerks (4), wobei das System aufweist:
einen Speicherverwaltungs-Skript-Editor (44) einer
Anwendungsentwicklungsumgebung (Application Development Environment) (42), wobei der Speicherverwaltungs-Skript-Editor (44) ausgebildet ist zum:
Analysieren eines Quellcodes einer drahtlosen Anwendung, um eine erste Vielzahl von Datenstrukturen der Anwendung zu identifizieren, die von der Anwendung während einer Laufzeit instantiiert wird; Identifizieren, aus der ersten Vielzahl von Datenstrukturen, einer zweiten Vielzahl von Datenstrukturen, die sicher gelöscht werden können; und
automatischen Erzeugen zumindest eines Speicherverwaltungs-Skripts zur Ausführung auf dem Endgerät, wobei das zumindest eine Speicherverwaltungs-Skript eine Benutzerschnittstelle (46) vorsieht zum Anzeigen von Instanzen der zweiten Vielzahl von Datenstrukturen und Empfangen einer Benutzereingabe, und zum Löschen ausgewählter Instanzen der zweiten Vielzahl von Datenstrukturen in Übereinstimmung mit der Benutzereingabe; und
Mittel (8, 16, 36) zum Ermöglichen eines Herunterladens bei Bedarf (On-Demand) eines jeden Speicherverwaltungs-Skripts auf das Endgerät.

13. System gemäß Anspruch 12, wobei die zweite Vielzahl von Datenstrukturen eines oder mehr aufweist aus:
temporären Dateien;
"Herunterladen bei Bedarf"-Ressourcen, die von der Anwendung verwendet werden;
Top-Level-Datenstrukturen; und
Datenkomponenten, die in einer Top-Level-Datenstruktur enthalten sind.

14. System gemäß Anspruch 13, wobei jedes Speicherverwaltungs-Skript eine vorgegebene Speicherverwaltungsfunktionalität implementiert.

15. System gemäß Anspruch 14, wobei die vorgegebene Speicherverwaltungsfunktionalität eines oder mehr aufweist aus:
Anzeigen von Instanzen von jeder der zweiten Vielzahl von Datenstrukturen;
Empfangen einer Benutzereingabe, die anzeigt, ob ein Benutzer eine oder mehre der angezeigten Instanzen löschen möchte oder nicht; und
Löschen einer oder mehrerer angezeigter Instanzen in Übereinstimmung mit der empfangenen Benutzereingabe.

16. System gemäß Anspruch 15, wobei die angezeigte Instanz eine Instanz einer Top-Level-Datenstruktur ist, und wobei die Funktionalität zum Löschen der angezeigten Instanz eine Funktionalität zum Löschen von entsprechenden Instanzen von Datenstrukturen einer unteren Ebene (lower level) aufweist, die in der Top-Level-Datenstruktur enthalten sind.

17. System gemäß Anspruch 14, wobei die vorgegebene Speicherverwaltungsfunktionalität eines oder mehr aufweist aus: Löschen von Anwendungsdaten mit niedriger Priorität; und Löschen von nicht notwendiger Anwendungslogik.

18. System gemäß Anspruch 12, das weiter Mittel aufweist zum Zuweisen einer Nutzungsbewertung zu jedem Speicherverwaltungs-Skript.

19. System gemäß Anspruch 18, wobei die Nutzungsbewertung eines aufweist aus:
a eine Bewertung "normal", die anzeigt, dass das jeweilige Skript eine Speicherverwaltungsfunktionalität vorsieht, die für eine normale Betriebsbedingung des Endgeräts geeignet ist;
b eine Bewertung "begrenzt", die anzeigt, dass das jeweilige Skript eine Speicherverwaltungsfunktionalität vorsieht, die für eine Betriebsbedingung mit wenig Speicher des Endgeräts geeignet ist; und
c eine Bewertung "kritisch", die anzeigt, dass das jeweilige Skript eine Speicherverwaltungsfunktionalität vorsieht, die für eine Betriebsbedingung mit bedenklich wenig Speicher des Endgeräts geeignet ist.

20. System gemäß Anspruch 12, wobei das Mittel zum Ermöglichen eines Herunterladens bei Bedarf eines jeden Speicherverwaltungs-Skripts aufweist:
ein Register eines Back-End-Servers, der mit einem Datennetzwerk verbunden ist, wobei das Register ausgebildet ist, jedes Speicherverwaltungs-Skript zu speichern; und
Mittel zum Liefern von Information, die jedes Skript identifiziert, an ein Anwendungs-Gateway, das eine Vielzahl von Endgeräten hostet.

21. System gemäß Anspruch 20, wobei das Mittel zum Liefern von Information, die jedes Skript identifiziert, an das Anwendungs-Gateway Mittel aufweist zum Senden einer Registrierungsnachricht an das Anwendungs-Gateway, wobei die Registrierungsnachricht einen Software-Identifizierer, der die drahtlose Anwendung identifiziert, und einen jeweiligen Link zu jedem gespeicherten Speicherverwaltungs-Skript enthält.

## Revendications

1. Procédé permettant la gestion de la mémoire pour un dispositif terminal (14) d'un réseau sans fil (4), le procédé comprenant les étapes consistant à :
utiliser un éditeur de script de gestion de la mémoire (44) d'un environnement de développement d'applications (42) pour :
analyser un code source d'une application sans fil (30) afin d'identifier une première pluralité de structures de données de l'application, qui sont instanciées par l'application lors de l'exécution ;
identifier dans la première pluralité de structures de données, une seconde pluralité de structures de données qui peut être supprimée de manière sûre ; et
produire automatiquement au moins un script de gestion de la mémoire destiné à être exécuté sur le dispositif terminal, ledit au moins un script de gestion de la mémoire fournissant une interface utilisateur pour afficher des instances de la seconde pluralité de structures de données, pour recevoir une entrée de l'utilisateur et pour supprimer des instances sélectionnées de la seconde pluralité de structures de données, en fonction de l'entrée de l'utilisateur ; et
valider le téléchargement à la demande de chaque script de gestion de la mémoire vers le dispositif terminal.

2. Procédé selon la revendication 1, dans lequel la seconde pluralité de structures de données comprend une ou plusieurs des catégories suivantes :
fichiers temporaires ;
ressources téléchargées à la demande, utilisées par l'application ; et
structures de données de niveau supérieur.

3. Procédé selon la revendication 2, dans lequel chaque script de gestion de la mémoire met en oeuvre une fonctionnalité prédéterminée de gestion de la mémoire.

4. Procédé selon la revendication 3, dans lequel la fonctionnalité prédéterminée de gestion de la mémoire comprend une ou plusieurs des étapes suivantes :
afficher des instances de chacune des structures dans la seconde pluralité de structures de données ;
recevoir une entrée de l'utilisateur indiquant si l'utilisateur souhaite ou non supprimer chacune des instances affichées ; et
supprimer l'instance affichée en fonction de l'entrée de l'utilisateur qui a été reçue.

5. Procédé selon la revendication 4, dans lequel l'instance affichée est une instance d'une structure de données de niveau supérieur et dans lequel l'étape de suppression de l'instance affichée comprend une étape de suppression d'instances correspondantes de structures de données de niveau inférieur contenues dans la structure de données de niveau supérieur.

6. Procédé selon la revendication 3, dans lequel la fonctionnalité prédéterminée de gestion de la mémoire comprend une ou plusieurs des suivantes :
suppression de données de l'application à faible priorité ; et
suppression de logiques non essentielles de l'application.

7. Procédé selon la revendication 1, comprenant en outre une étape consistant à attribuer un score d'utilisation à chaque script de gestion de la mémoire.

8. Procédé selon la revendication 7, dans lequel le score d'utilisation comprend l'un quelconque des suivantes :
score « normal », indiquant que le script respectif fournit une fonctionnalité de gestion de la mémoire qui convient pour des conditions normales de fonctionnement du dispositif terminal ;
score « limité », indiquant que le script respectif fournit une fonctionnalité de gestion de la mémoire qui convient pour des conditions de fonctionnement du dispositif terminal avec peu de mémoire ; et
score « critique », indiquant que le script respectif fournit une fonctionnalité de gestion de la mémoire qui convient pour des conditions de fonctionnement du dispositif terminal avec un niveau critiquement faible de la mémoire.

9. Procédé selon la revendication 1, dans lequel l'étape de validation du téléchargement à la demande de chaque script de gestion de la mémoire comprend les étapes consistant à :
rendre chaque script accessible sur un réseau de données ; et
fournir des informations identifiant chaque script pour une passerelle d'application qui gère une pluralité de dispositifs terminaux.

10. Procédé selon la revendication 9, dans lequel l'étape consistant à rendre chaque script accessible sur un réseau de données comprend une étape consistant à enregistrer chaque script dans un registre d'un serveur d'arrière-plan connecté au réseau de données.

11. Procédé selon la revendication 10, dans lequel l'étape de fourniture d'informations identifiant chaque script pour la passerelle d'application comprend une étape consistant à envoyer un message d'enregistrement à la passerelle d'application, le message d'enregistrement contenant un identificateur logiciel qui identifie l'application sans fil et un lien respectif vers chaque script de gestion de la mémoire enregistré.

12. Système destiné à permettre la gestion centralisée de la mémoire pour un dispositif terminal (14) d'un réseau sans fil (4), le système comprenant :
un éditeur de script de gestion de la mémoire (44) d'un environnement de développement d'applications (42), l'éditeur de script de gestion de la mémoire (44) étant conçu pour :
analyser un code source d'une application sans fil afin d'identifier une première pluralité de structures de données de l'application, qui sont instanciées par l'application à l'exécution ;
identifier dans la première pluralité de structures de données une seconde pluralité de structures de données qui peut être supprimée de manière sûre ; et
produire automatiquement au moins un script de gestion de la mémoire destiné à être exécuté sur le dispositif terminal, ledit au moins un script de gestion de la mémoire fournissant une interface utilisateur (46) pour afficher des instances de la seconde pluralité de structures de données, pour recevoir une entrée de l'utilisateur et pour supprimer des instances sélectionnées de la seconde pluralité de structures de données, en fonction de l'entrée de l'utilisateur ; et
un moyen (8, 16, 36) destiné à valider le téléchargement à la demande de chaque script de gestion de la mémoire vers le dispositif terminal.

13. Système selon la revendication 12, dans lequel la seconde pluralité de structures de données comprend une ou plusieurs des catégories suivantes :
fichiers temporaires ;
ressources téléchargées à la demande, utilisées par l'application ;
structures de données de niveau supérieur ; et
composants de données contenus dans une structure de données de niveau supérieur.

14. Système selon la revendication 13, dans lequel chaque script de gestion de la mémoire met en oeuvre une fonctionnalité prédéterminée de gestion de la mémoire.

15. Système selon la revendication 14, dans lequel la fonctionnalité prédéterminée de gestion de la mémoire comprend une ou plusieurs des fonctionnalités suivantes :
afficher des instances de chacune des structures dans la seconde pluralité de structures de données ;
recevoir une entrée de l'utilisateur indiquant si l'utilisateur souhaite ou non supprimer une ou plusieurs des instances affichées ; et
supprimer lesdites une ou plusieurs instances affichées en fonction de l'entrée de l'utilisateur qui a été reçue.

16. Système selon la revendication 15, dans lequel l'instance affichée est une instance d'une structure de données de niveau supérieur et dans lequel la fonctionnalité de suppression de l'instance affichée comprend une fonctionnalité de suppression d'instances correspondantes de structures de données de niveau inférieur contenues dans la structure de données de niveau supérieur.

17. Système selon la revendication 14, dans lequel la fonctionnalité prédéterminée de gestion de la mémoire comprend une ou plusieurs des suivantes : suppression de données de l'application à faible priorité ; et suppression de logiques non essentielles de l'application.

18. Système selon la revendication 12, comprenant en outre un moyen destiné à attribuer un score d'utilisation à chaque script de gestion de la mémoire.

19. Système selon la revendication 18, dans lequel le score d'utilisation comprend l'un quelconque des suivantes :
score « normal », indiquant que le script respectif fournit une fonctionnalité de gestion de la mémoire qui convient pour des conditions normales de fonctionnement du dispositif terminal ;
score « limité », indiquant que le script respectif fournit une fonctionnalité de gestion de la mémoire qui convient pour des conditions de fonctionnement du dispositif terminal avec peu de mémoire ; et
score « critique », indiquant que le script respectif fournit une fonctionnalité de gestion de la mémoire qui convient pour des conditions de fonctionnement du dispositif terminal avec un niveau critiquement faible de la mémoire.

20. Système selon la revendication 12, dans lequel le moyen destiné à valider le téléchargement à la demande de chaque script de gestion de la mémoire comprend :
un registre d'un serveur d'arrière-plan connecté à un réseau de données, le registre étant conçu pour stocker chaque script de gestion de la mémoire ; et
un moyen destiné à fournir des informations identifiant chaque script pour une passerelle d'application qui gère une pluralité de dispositifs terminaux.

21. Système selon la revendication 20, dans lequel le moyen destiné à fournir des informations identifiant chaque script pour la passerelle d'application comprend un moyen destiné à envoyer un message d'enregistrement à la passerelle d'application, le message d'enregistrement contenant un identificateur logiciel qui identifie l'application sans fil et un lien respectif vers chaque script de gestion de la mémoire enregistré.
